# EUROPÄISCHE PATENTSCHRIFT

(11) **EP 2 888 715 B1**
(45) Veröffentlichungstag und Bekanntmachung des Hinweises auf die Patenterteilung: **16.01.2019**
(21) Anmeldenummer: 13745041.7
(22) Anmeldetag: 31.07.2013
(51) Int. Cl.: B60R 1/00, G06T 7/73, G06T 5/00

(54) **VERFAHREN UND VORRICHTUNG ZUM BETREIBEN EINES FAHRZEUGS**
METHOD AND DEVICE FOR OPERATING A VEHICLE
PROCÉDÉ ET DISPOSITIF DESTINÉS À FAIRE FONCTIONNER UN VÉHICULE

(30) Priorität: 23.08.2012 DE 102012215026
(43) Veröffentlichungstag der Anmeldung: 01.07.2015
(73) Patentinhaber: Bayerische Motoren Werke Aktiengesellschaft, 80809 München (DE)
(72) Erfinder: GRAEF, Michael, 82166 Graefelfing (DE)
(86) Internationale Anmeldenummer: PCT/EP2013/066046
(87) Internationale Veröffentlichungsnummer: WO 2014/029591

(56) Entgegenhaltungen:
- DE-A1-102010 010 912
- US-A1- 2004 169 617
- US-A1- 2008 075 391
- SOON-YOUNG LEE ET AL: "Panoramic scene generation from multi-view images with close foreground objects", 2010 PICTURE CODING SYMPOSIUM (PCS 2010) : NAGOYA, JAPAN, 8 - 10 DECEMBER 2010, IEEE, PISCATAWAY, NJ, 8. Dezember 2010 (2010-12-08), Seiten 486-489, XP031885213, DOI: 10.1109/PCS.2010.5702543 ISBN: 978-1-4244-7134-8
- THANISSORN PANARUNGSUN ET AL: "Foreground rejection for parallax removal in video sequence stitching", INTELLIGENT SIGNAL PROCESSING AND COMMUNICATIONS SYSTEMS (ISPACS), 2011 INTERNATIONAL SYMPOSIUM ON, IEEE, 7. Dezember 2011 (2011-12-07), Seiten 1-6, XP032114759, DOI: 10.1109/ISPACS.2011.6146187 ISBN: 978-1-4577-2165-6

## Beschreibung

Die Erfindung betrifft ein Verfahren und eine Vorrichtung zum Betreiben eines Fahrzeugs, das eine erste und eine zweite Kamera aufweist.
Fahrzeuge weisen häufig zwei Seitenspiegel und einen Rückspiegel auf, mittels derer ein Fahrzeugführer sich einen Überblick über die Umgebung des Fahrzeugs machen kann. Hierfür blickt der Fahrzeugführer jeweils in den Seiten- oder Rückspiegel oder führt einen Schulterblick aus.
Die US 2008/0253685 A1 offenbart ein Verfahren, in dem mehrere Bilder aus verschiedenen Positionen oder Winkeln zusammengefügt und verknüpft werden, sodass nach dem Zusammenfügen und Verknüpfen ein viel größeres Panoramabild erstellt wird.

Die Druckschrift US2004/0169617 A1 offenbart ein Verfahren um aus mehreren Einzelbildern, die mittels an einem Luftfahrzeug angebrachter Kameras mit überlappenden Sichtfeldern erzeugt wurden, ein Panoramabild zu erzeugen. Die Aufgabe, die der Erfindung zugrunde liegt, ist es, ein Verfahren beziehungsweise eine korrespondierende Vorrichtung zu schaffen, um ein Bild zu ermitteln, das einen Umgebungsbereich um ein Fahrzeug für einen Fahrzeugführer komfortabel repräsentiert.
Die Aufgabe wird gelöst durch die Merkmale der unabhängigen Patentansprüche. Vorteilhafte Ausgestaltungen sind in den Unteransprüchen gekennzeichnet.
Die Erfindung zeichnet sich aus durch ein Verfahren beziehungsweise durch eine korrespondierende Vorrichtung zum Betreiben eines Fahrzeugs. Das Fahrzeug weist eine erste und eine zweite Kamera auf, die dazu ausgebildet sind, einen Umgebungsbereich um das Fahrzeug zu erfassen. Die erste Kamera weist ein erstes Sichtfeld auf. Von der ersten Kamera wird ein erstes Einzelbild des ersten Sichtfeldes erfasst. Es werden erste Bilddaten des ersten Einzelbildes bereitgestellt. Die zweite Kamera weist ein zweites Sichtfeld auf, das sich mit dem ersten Sichtfeld in einem überlappenden Bereich überlappt. Die zweite Kamera erfasst ein zweites Einzelbild des zweiten Sichtfeldes und stellt zweite Bilddaten des zweiten Einzelbildes bereit.

Abhängig von den ersten und zweiten Bilddaten wird eine Objektkorrektur ausgeführt. In der Objektkorrektur wird eine Entfernung von in dem zweiten Einzelbild abgebildeten Objekten zu einem vorgegebenen Bezugspunkt ermittelt. Bei den Objekten handelt es sich beispielsweise um markante Objekte, die auf dem jeweiligen Einzelbild abgebildet sind, wie zum Beispiel markante Objekte im Vordergrund des jeweiligen Einzelbildes, wie Fahrzeuge, Fußgänger, Laternen, Häuser oder andere markante Objekte. Für den abgebildeten Himmel oder andere nichtmarkante Objekte im Hintergrund ist es gegebenenfalls nicht nötig die Entfernung zu ermitteln. Es kann aber auch gegebenenfalls nötig sein für abgebildete Objekte im Hintergrund wie beispielsweise markanten Wolken die Entfernung zu ermitteln.

Außerdem wird jeweils ein Winkel des jeweiligen Objekts zu einer vorgegebenen Bezugsachse ermittelt. Abhängig von der ermittelten Entfernung und des ermittelten Winkels des jeweiligen Objekts wird ermittelt, ob das jeweilige Objekt sich in dem überlappenden Bereich befindet. Falls dies ermittelt wurde, wird das jeweilige Objekt aus dem zweiten Einzelbild entfernt. Nach dem Ausführen der Objektkorrektur wird ein Gesamtbild ermittelt, das abhängig von dem ersten Einzelbild und dem zweiten Einzelbild zusammengesetzt wird.

Da die jeweiligen Objekte im überlappenden Bereich auf den beiden Einzelbildern abgebildet sind, ist es unvorteilhaft beide Einzelbilder aneinanderzufügen, da in so einem Fall auf dem Gesamtbild Objekte doppelt abgebildet sein können. Indem die Objekte allerdings aus einem Einzelbild herausgenommen werden, können die Einzelbilder gegebenenfalls optisch verständlicher zu einem Gesamtbild zusammengefügt werden. Hierdurch wird ein großer Umgebungsbereich um das Fahrzeug in einem Gesamtbild erfasst und kann beispielsweise von einem Fahrzeugführer auf einen Blick erfasst werden. Außerdem können gegebenenfalls Seitenspiegel des Fahrzeugs durch Kameras ersetzt werden, wodurch die Aerodynamik des Fahrzeugs verbessert wird.

Gemäß einer vorteilhaften Ausgestaltung weist das Fahrzeug eine erstseitige Kamera auf, die in einem Bereich einer ersten Fahrzeugseite angeordnet ist. Das Fahrzeug weist außerdem eine zweitseitige Kamera auf, die in einem Bereich einer zweiten Fahrzeugseite angeordnet ist. Das Fahrzeug weist außerdem eine Rückkamera auf, die in einem Heckbereich des Fahrzeugs angeordnet ist. Es wird die Objektkorrektur bezüglich der erstseitigen Kamera als zweite Kamera und der Rückkamera als erste Kamera durchgeführt. Ferner wird die Objektkorrektur bezüglich der zweitseitigen Kamera als zweite Kamera und der Rückkamera als erste Kamera durchgeführt. Anschließend wird nach dem Ausführen der Objektkorrektur das Gesamtbild ermittelt, das abhängig von den jeweiligen Einzelbildern der erstseitigen Kamera, der Rückkamera und der zweitseitigen Kamera zusammengesetzt wird.

Hierdurch wird gegebenenfalls ein noch größerer Umgebungsbereich in einem Gesamtbild bereitgestellt, als der von zwei Kameras erfasste Umgebungsbereich. So erhält der Fahrzeugführer beispielsweise auf einen Blick gegebenenfalls noch mehr Informationen zur Umgebung.

Gemäß einer weiteren Ausgestaltung weist das Fahrzeug eine erstseitige Kamera auf, die in einem Bereich einer ersten Fahrzeugseite angeordnet ist. Es weist eine zweitseitige Kamera auf, die in einem Bereich einer zweiten Fahrzeugseite angeordnet ist, und eine Rückkamera, die in einem Heckbereich des Fahrzeugs angeordnet ist. Der Objektkorrektur wird bezüglich der erstseitigen Kamera als erste Kamera und der Rückkamera als zweite Kamera durchgeführt. Ferner wird die Objektkorrektur bezüglich der zweitseitigen Kamera als erste Kamera und der Rückkamera als zweite Kamera durchgeführt. Nach Ausführen der Objektkorrektur wird das Gesamtbild ermittelt, das abhängig von den jeweiligen Einzelbildern der erstseitigen Kamera der Rückkamera und der zweitseitigen Kamera zusammengesetzt wird. Hierdurch müssen nur in dem Einzelbild der Rückkamera die Entfernungen und Winkel der Objekte ermittelt werden, was gegebenenfalls Rechenaufwand reduziert.

Gemäß einer weiteren vorteilhaften Ausgestaltung weist das Fahrzeug eine erstseitige Kamera auf, die in einem Bereich einer ersten Fahrzeugseite angeordnet ist. Es weist eine zweitseitige Kamera auf, die in einem Bereich einer zweiten Fahrzeugseite angeordnet ist und eine Rückkamera, die in einem Heckbereich des Fahrzeugs angeordnet ist. Die Objektkorrektur wird bezüglich der erstseitigen Kamera als erste Kamera und der Rückkamera als zweite Kamera durchgeführt. Ferner wird die Objektkorrektur bezüglich der zweitseitigen Kamera als zweite Kamera und der Rückkamera als erste Kamera durchgeführt. Nach Ausführen der Objektkorrektur wird das Gesamtbild ermittelt, das abhängig von den jeweiligen Einzelbildern der erstseitigen Kamera, der Rückkamera und der zweitseitigen Kamera zusammengesetzt wird.

Gemäß einer weiteren vorteilhaften Ausgestaltung weist das Fahrzeug eine erstseitige Kamera auf, die in einem Bereich einer ersten Fahrzeugseite angeordnet. Es weist eine zweitseitige Kamera auf, die in einem Bereich einer zweiten Fahrzeugseite angeordnet ist und es weist eine Rückkamera auf, die in einem Heckbereich des Fahrzeugs angeordnet ist. Die Objektkorrektur wird bezüglich der erstseitigen Kamera als zweite Kamera und der Rückkamera als erste Kamera durchgeführt. Ferner wird die Objektkorrektur bezüglich der zweitseitigen Kamera als erste Kamera und der Rückkamera als zweite Kamera durchgeführt. Nach Ausführen der Objektkorrektur wird das Gesamtbild ermittelt, das abhängig von den jeweiligen Einzelbildern der erstseitigen Kamera, der Rückkamera und der zweitseitigen Kamera zusammengesetzt wird.

Gemäß einer weiteren vorteilhaften Ausgestaltung deckt das Gesamtbild ein Sichtfeld von mindestens in etwa 180° ab. Durch die Abdeckung eines so großen Sichtfeldes kann gegebenenfalls komplett auf Seiten- und Rückspiegel verzichtet werden und der Fahrzeugführer kann sich einen Überblick über die Umgebung des Fahrzeugs machen indem er das Gesamtbild betrachtet. Gegebenenfalls kann sogar auf einen Schulterblick verzichtet werden.

Gemäß einer weiteren vorteilhaften Ausgestaltung weist das Fahrzeug Abstandssensoren auf, die dazu ausgebildet sind, den Abstand des Fahrzeugs zu Objektpunkten in der Umgebung des Fahrzeugs zu erfassen. Die Entfernung des jeweiligen Objekts wird abhängig von Messwerten der Abstandssensoren ermittelt. Falls das Fahrzeug schon über Abstandssensoren verfügt, die es für andere Zwecke wie beispielsweise eine Einparkhilfe benötigt, ist es so einfach und gegebenenfalls kostengünstig möglich die Abstände vom jeweiligen Objekt zu detektieren.

Gemäß einer weiteren vorteilhaften Ausgestaltung wird die Entfernung des jeweiligen Objekts abhängig von den Bilddaten der ersten und/oder der zweiten Kamera mittels Triangulation ermittelt. Hierdurch lässt sich gegebenenfalls relativ genau der Abstand zu einzelnen Objekten ermitteln.

Gemäß einer weiteren vorteilhaften Ausgestaltung ist mindestens die erste und/oder die zweite Kamera als Stereokamera ausgebildet. Hierdurch lässt sich gegebenenfalls die Entfernung der Objekte leicht durch Triangulation der Stereokamerabilder ermitteln.

Gemäß einer weiteren vorteilhaften Ausgestaltung werden, falls mindestens ein Objekt sowohl innerhalb des überlappenden Bildbereichs als auch außerhalb des überlappenden Bereichs liegt, ein Übergangsbereich des Gesamtbilds mittels Bildtransformation angepasst. Der Übergangsbereich ist kennzeichnend für den Bereich des Gesamtbildes, in dem Bildinhalte des ersten Einzelbildes an Bildinhalte des zweiten Einzelbildes angrenzen. Der Übergangsbereich wird mittels Bildtransformation so angepasst, dass jeweilige einander entsprechende Kanten des Objekts, das sowohl innerhalb des überlappenden Bereichs als auch außerhalb des überlappenden Bereichs liegt, im Übergangsbereich ineinander übergehen. Hierdurch lässt sich das Gesamtbild gegebenenfalls klarer für den Fahrzeugführer darstellen.

Ausführungsbeispiele der Erfindung sind im Folgenden anhand der schematischen Zeichnungen näher erläutert. Es zeigen:
- Figur 1: ein Fahrzeug mit zwei Kameras,
- Figur 2: ein Fahrzeug mit drei Kameras,
- Figur 3: eine Darstellung einer Objektkorrektur,
- Figur 4: ein Graph von Winkel und Entfernung von Objekten,
- Figur 5: eine Ansicht eines Sichtfeldes,
- Figur 6: drei Kameras mit der selben Position,
- Figur 7: ein Fahrzeug mit zwei Seitenspiegeln und einem Rückspiegel,
- Figur 8: ein Fahrzeug mit drei Kameras und drei Bildschirmen und
- Figur 9: ein weiterer Graph von Winkel und Entfernung von Objekten.

Elemente gleicher Konstruktion oder Funktion sind figurenübergreifend mit den gleichen Bezugszeichen gekennzeichnet.

In einem ersten Ausführungsbeispiel weist ein Fahrzeug 1 eine erstseitige Kamera KAM_L und eine Rückkamera KAM_H auf, die dazu ausgebildet sind, einen Umgebungsbereich um das Fahrzeug 1 zu erfassen. Die erstseitige Kamera KAM_L weist ein erstseitiges Sichtfeld SF_L auf, die Rückkamera KAM_H weist ein Heck-Sichtfeld SF_H auf. Die Sichtfelder der beiden Kameras überlappen sich in einem überlappenden Bereich ÜB. Der überlappende Bereich ÜB wird durch eine Trennebene TR begrenzt. Die Trennebene TR ist bevorzugt am Rand eines Sichtfeldes angeordnet, wie beispielsweise des erstseitigen Sichtfeldes SF_L.

In dem Fahrzeug 1 ist außerdem eine Vorrichtung SV angeordnet, die eine Recheneinheit und einen Daten- und Programmspeicher und eine Kommunikationsschnittstelle aufweist. Die Vorrichtung SV kann als eine Baueinheit ausgebildet sein. Sie kann jedoch auch verteilt auf zwei oder mehrere in dem Fahrzeug 1 angeordnete Baueinheiten ausgebildet sein. Die Vorrichtung SV ist mit den Kameras derart gekoppelt, dass sie Bilddaten von ihnen empfangen kann.

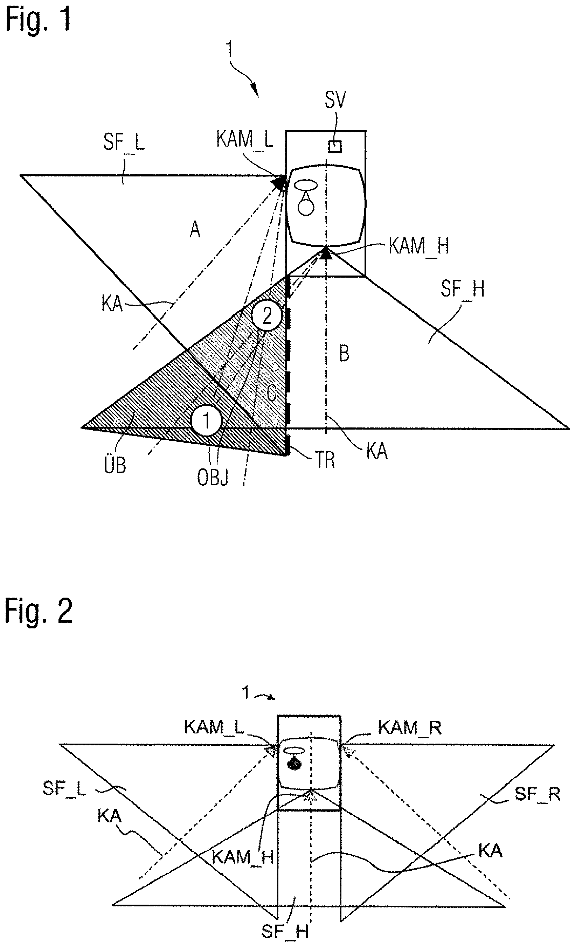

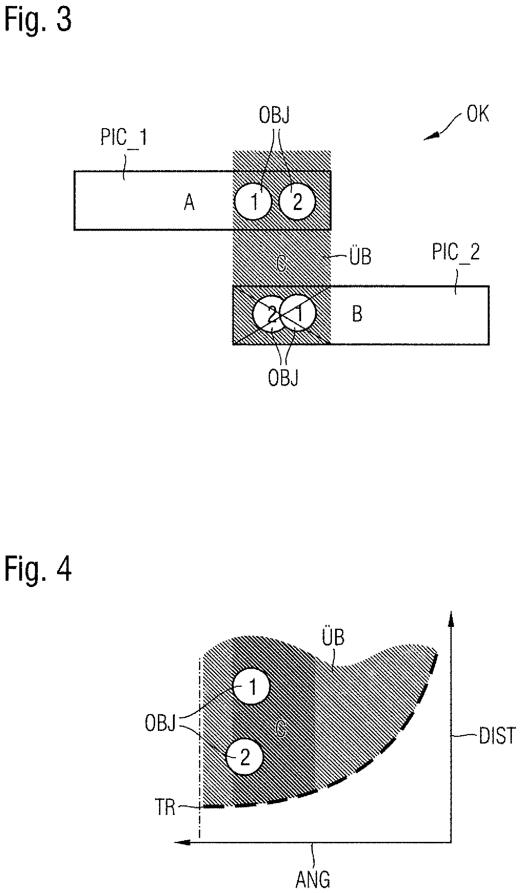

Im Folgenden wird eine Objektkorrektur OK an Figur 1 und Figur 3 näher beschrieben, die auf der Recheineinheit der Vorrichtung SV abgearbeitet werden kann. Die Objektkorrektur OK kann bezüglich der erstseitigen Kamera KAM_L als eine erste Kamera und der Rückkamera KAM_H als eine zweite Kamera durchgeführt werden. Sie kann alternativ bezüglich der erstseitigen Kamera KAM_L als zweite Kamera und der Rückkamera KAM_H als erste Kamera durchgeführt werden. Die erste Kamera erfasst ein erstes Einzelbild PIC_1 eines ersten Sichtfelds. Die zweite Kamera erfasst ein zweites Einzelbild PIC_2 eines zweiten Sichtfelds. Die Objektkorrektur OK wird abhängig von ersten Bilddaten des ersten Einzelbilds PIC_1 und zweiten Bilddaten des zweiten Einzelbilds PIC_2 ermittelt, die jeweils von der ersten und der zweiten Kamera bereitgestellt werden.

Aus in dem zweiten Einzelbild PIC_2 abgebildeten Objekten OBJ wird eine Entfernung DIST ermittelt zu einem vorgegebenen Bezugspunkt. Die Entfernung DIST wird beispielsweise mittels Abstandssensoren ermittelt, die dazu ausgebildet sind, den Abstand des Fahrzeugs 1 zu Objektpunkten in der Umgebung des Fahrzeugs 1 zu erfassen. Die Entfernung DIST kann alternativ oder zusätzlich mittels Triangulation ermittelt werden, Beispielsweise abhängig von den Bilddaten der ersten und/oder der zweiten Kamera. Da sich die Sichtfelder der beiden Kameras in dem überlappenden Bereich ÜB überlappen, können für den überlappenden Bereich ÜB mittels Triangulation Entfernungen DIST von Objekten OBJ ermittelt werden. Die erste Kamera und/oder die zweite Kamera können alternativ oder zusätzlich auch als Stereokamera ausgebildet sein. Beispielsweise ist es vorteilhaft, wenn die zweite Kamera als Stereokamera ausgebildet ist.

Der Bezugspunkt ist beispielsweise ein Ursprungspunkt der zweiten Kamera oder des Fahrzeugs 1. Zusätzlich zur Entfernung DIST wird jeweils ein Winkel ANG des jeweiligen Objekts OBJ zu einer vorgegebenen Bezugsachse KA ermittelt. Die Bezugsachse KA ist beispielsweise eine Kameraachse der zweiten Kamera. Die Kameraachse ist beispielsweise eine Normale durch den Mittelpunkt der Sensorfläche.

Abhängig von der ermittelten Entfernung DIST und des ermittelten Winkels ANG des jeweiligen Objekts OBJ kann nun ermittelt werden, ob das jeweilige Objekt OBJ sich in dem überlappenden Bereich ÜB befindet. Falls dies ermittelt wurde, wird das jeweilige Objekt OBJ aus dem zweiten Einzelbild PIC_2 entfernt.

Nach dem Ausführen der Objektkorrektur OK wird ein Gesamtbild ermittelt, das abhängig von dem ersten Einzelbild PIC_1 und dem zweiten Einzelbild PIC_2 zusammengesetzt wird.

In einem zweiten Ausführungsbeispiel (Figur 2) weist das Fahrzeug 1 zusätzlich eine zweitseitige Kamera KAM_R auf, dessen Sichtfeld SF_R sich teilweise mit dem Heck-Sichtfeld SF_H der Rückkamera KAM_H überlappt. In diesem Fall wird beispielsweise die Objektkorrektur OK bezüglich der erstseitigen Kamera KAM_L als zweite Kamera und der Rückkamera KAM_H als erste Kamera ausgeführt. Ferner wird die Objektkorrektur OK bezüglich der zweitseitigen Kamera KAM_R als zweite Kamera und der Rückkamera KAM_H als erste Kamera durchgeführt. Nach dem Ausführen der Objektkorrektur OK wird das Gesamtbild abhängig von den jeweiligen Einzelbildern der erstseitigen Kamera KAM_L der Rückkamera KAM_H und der zweitseitigen Kamera KAM_R zusammengesetzt.

Es ist alternativ auch möglich, dass die Objektkorrektur OK bezüglich der erstseitigen Kamera KAM_L als erste Kamera und der Rückkamera KAM_H als zweite Kamera durchgeführt wird, und ferner bezüglich der zweitseitigen Kamera KAM_R als erste Kamera und der Rückkamera KAM_H als zweite Kamera durchgeführt wird.

Alternativ ist es möglich, dass die Objektkorrektur OK bezüglich der erstseitigen Kamera KAM_L als erste Kamera und der Rückkamera KAM_H als zweite Kamera durchgeführt wird und ferner bezüglich der zweitseitigen Kamera KAM_R als zweite Kamera und der Rückkamera KAM_H als erste Kamera durchgeführt wird.

Alternativ ist es möglich, dass die Objektkorrektur OK bezüglich der erstseitigen Kamera KAM_L als zweite Kamera und der Rückkamera KAM_H als erste Kamera durchgeführt wird und ferner bezüglich der zweitseitigen Kamera KAM_R als erste Kamera und der Rückkamera KAM_H als zweite Kamera durchgeführt wird.

Es ist von Vorteil, wenn jede Kamera jeweils ein großes Sichtfeld aufweist. Da so der Fahrzeugführer einen besseren Überblick über die Fahrzeugumgebung hat. So ist es beispielsweise von Vorteil, wenn das Gesamtbild mindestens in etwa ein Sichtfeld von 180° abdeckt. Außerdem ist es von Vorteil, wenn das Heck-Sichtfeld SF_H der Rückkamera KAM_H sehr groß ist, wie beispielsweise größer als in etwa 120°. Da sonst Bereiche am Rand des Hecks des Fahrzeugs 1 nicht erfasst werden können (siehe Figur 2).

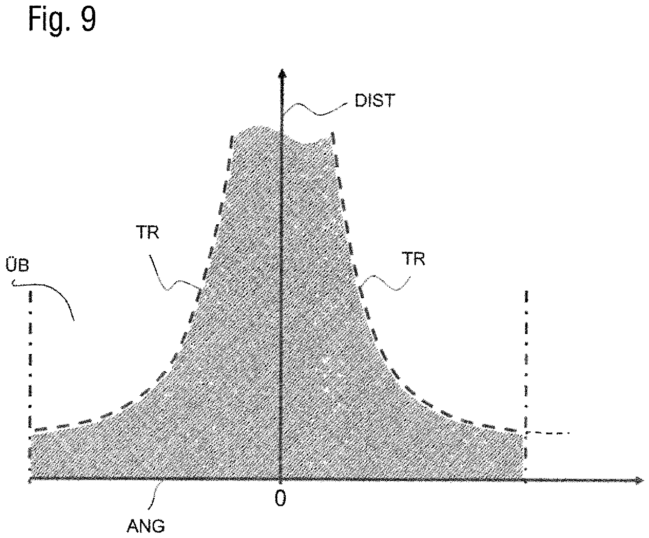

In Figur 9 und Figur 4 ist der Zusammenhang zwischen Entfernung DIST und Winkel ANG der Objekte OBJ verdeutlicht. Die Trennebene TR ist eine Funktion von Entfernung DIST und Winkel ANG. Liegt ein Objekt OBJ bezüglich Winkel ANG und Entfernung DIST auf der Seite der Trennebene TR, die den überlappenden Bereich ÜB definiert, so wird das Objekt OBJ aus dem zweiten Einzelbild PIC_2 entfernt. Liegt es auf der anderen Seite, so wird das Objekt OBJ beibehalten.

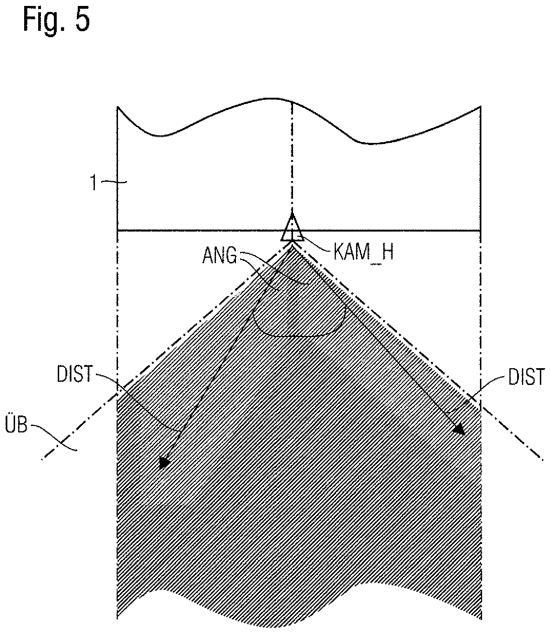

In Figur 5 ist zu die Entfernung DIST von Objekten OBJ zum Kameraursprungspunkt definiert. Außerdem werden der überlappende Bereich ÜB und der nichtüberlappende Bereich verdeutlicht.

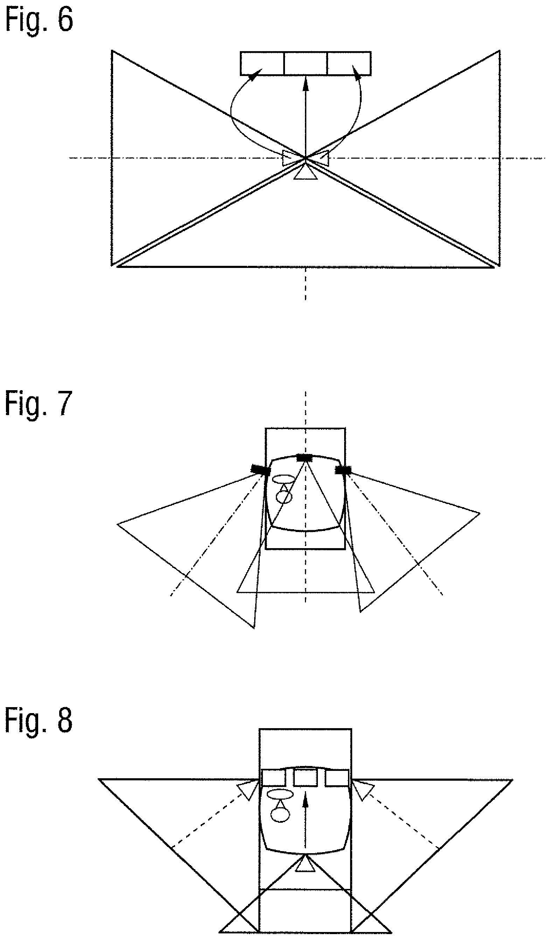

In Figur 6 ist zu sehen, wie beispielsweise drei Kamerabilder zu einem Gesamtbild zusammengefügt werden können. Hierbei ist die Besonderheit, dass die Kamerabilder jeweils von verschiedenen Winkeln ANG, aber von derselben Position aufgenommen worden sind. So ist es einfach möglich die Bilder zusammenzufügen. Das Problem, dass bei dem Fahrzeug 1 die Kameras im Allgemeinen nicht an der selben Position befestigt sind kann mittels der Objektkorrektur OK gelöst werden.

In Figur 7 ist ein weiteres Fahrzeug mit zwei Seitenspiegeln und einem Rückspiegel zu sehen. Der Fahrer muss um sich einen Überblick um die Fahrzeugumgebung zu verschaffen, seinen Kopf zu jedem Spiegel einzeln wenden und zusätzlich, um die toten Winkel zu überblicken, einen Schulterblick nach links und einen Schulterblick nach rechts ausführen.

In Figur 8 ist ein weiteres Fahrzeug zu sehen mit drei Kameras. Jeder Kamera ist ein Bildschirm zugeordnet. Die Bildschirme sind jeweils dazu ausgebildet Kamerabilder der ihr zugeordneten Kamera abzubilden. Um sich einen Gesamtüberblick um die Fahrzeugumgebung zu machen, muss auch hier muss der Fahrer zumindest in jeden Bildschirm einzeln schauen und kann nicht das Gesamtbild erfassen, indem er nur auf einen Bildschirm schaut, wie es möglich wäre, wenn abhängig von den Einzelbildern der Kameras ein Gesamtbild ermittelt wird.

Falls ein Objekt OBJ sowohl innerhalb des überlappenden Bereichs ÜB als auch außerhalb des überlappenden Bereichs ÜB liegt kann ein Übergangsbereich des Gesamtbilds, der kennzeichnend ist für den Bereich des Gesamtbildes, in dem Bildinhalte des ersten Einzelbildes PIC_1 an Bildinhalte des zweite Einzelbildes PIC_2 angrenzen, mittels Bildtransformation angepasst werden. Dies geschieht in einer solchen Weise, dass jeweilige einander entsprechende Kanten des Objekts OBJ, das sowohl innerhalb des überlappenden Bereichs ÜB als auch außerhalb des überlappenden Bereichs ÜB liegt, im Übergangsbereich in einander übergehen.

### Bezugszeichenliste:

- 1: Fahrzeug
- KAM_L: erstseitige Kamera
- KAM_H: Rückkamera
- KAM_R: zweitseitige Kamera
- SF_L: erstseitiges Sichtfeld
- SF_H: Heck-Sichtfeld
- SF_R: zweitseitiges Sichtfeld
- PIC_1: erstes Einzelbild
- PIC_2: zweites Einzelbild
- ÜB: überlappender Bereich
- OBJ: Objekt
- OK: Objektkorrektur
- KA: Bezugsachse
- TR: Trennebene
- DIST: Entfernung
- ANG: Winkel
- SV: Vorrichtung

## Patentansprüche

1. Verfahren zum Betreiben eines Fahrzeugs (1), das eine erste und eine zweite Kamera aufweist, die dazu ausgebildet sind einen Umgebungsbereich um das Fahrzeug (1) zu erfassen,
- bei dem die erste Kamera
-- ein erstes Sichtfeld aufweist,
-- ein erstes Einzelbild (PIC_1) des ersten Sichtfeldes erfasst und
-- erste Bilddaten des ersten Einzelbildes (PIC_1) bereitstellt,
- bei dem die zweite Kamera
-- ein zweites Sichtfeld aufweist, das sich mit dem ersten Sichtfeld in einem überlappenden Bereich (ÜB) überlappt,
-- ein zweites Einzelbild (PIC_2) des zweiten Sichtfeldes erfasst und
-- zweite Bilddaten des zweiten Einzelbildes (PIC_2) bereitstellt,
- bei dem eine Objektkorrektur (OK) abhängig von den ersten und zweiten Bilddaten ausgeführt wird, aufweisend:
-- Ermitteln jeweils einer Entfernung (DIST) von in dem zweiten Einzelbild (PIC_2) abgebildeten Objekten (OBJ) zu einem vorgegebenen Bezugspunkt,
-- Ermitteln jeweils eines Winkels (ANG) des jeweiligen Objekts (OBJ) zu einer vorgegebenen Bezugsachse (KA),
-- abhängig von der ermittelten Entfernung (DIST) und des ermittelten Winkels (ANG) des jeweiligen Objekts (OBJ) Ermitteln, ob das jeweilige Objekt (OBJ) sich in dem überlappenden Bereich (ÜB) befindet und falls ermittelt wurde, dass das jeweilige Objekt (OBJ) in dem überlappenden Bereich (ÜB) ist, Entfernen des jeweiligen Objekts (OBJ) aus dem zweiten Einzelbild (PIC_2),
- bei dem ein Gesamtbild ermittelt wird nach dem Ausführen der Objektkorrektur (OK), das abhängig von dem ersten Einzelbild (PIC_1) und dem zweiten Einzelbild (PIC_2) zusammengesetzt wird.

2. Verfahren nach Anspruch 1, bei dem das Fahrzeug (1)
- eine erstseitige Kamera (KAM_L) aufweist, die in einem Bereich einer ersten Fahrzeugseite angeordnet ist,
- eine zweitseitige Kamera (KAM_R) aufweist, die in einem Bereich einer zweiten Fahrzeugseite angeordnet ist,
- eine Rückkamera (KAM_H) aufweist, die in einem Heckbereich des Fahrzeugs (1) angeordnet ist und
- bei dem die Objektkorrektur (OK) bezüglich der erstseitigen Kamera (KAM_L) als zweite Kamera und der Rückkamera (KAM_H) als erste Kamera durchgeführt wird,
- bei dem die Objektkorrektur (OK) ferner bezüglich der zweitseitigen Kamera (KAM_R) als zweite Kamera und der Rückkamera (KAM_H) als erste Kamera durchgeführt wird und bei dem das Gesamtbild ermittelt wird nach dem Ausführen der Objektkorrektur (OK), das abhängig von den jeweiligen Einzelbildern der erstseitigen Kamera (KAM_L), der Rückkamera (KAM_H) und der zweitseitigen Kamera (KAM_R) zusammengesetzt wird.

3. Verfahren nach Anspruch 1, bei dem das Fahrzeug (1)
- eine erstseitige Kamera (KAM_L) aufweist, die in einem Bereich einer ersten Fahrzeugseite angeordnet ist,
- eine zweitseitige Kamera (KAM_R) aufweist, die in einem Bereich einer zweiten Fahrzeugseite angeordnet ist,
- eine Rückkamera (KAM_H) aufweist, die in einem Heckbereich des Fahrzeugs (1) angeordnet ist,
- bei dem die Objektkorrektur (OK) bezüglich der erstseitigen Kamera (KAM_L) als erste Kamera und der Rückkamera (KAM_H) als zweite Kamera durchgeführt wird,
- bei dem die Objektkorrektur (OK) ferner bezüglich der zweitseitigen Kamera (KAM_R) als erste Kamera und der Rückkamera (KAM_H) als zweite Kamera durchgeführt wird und bei dem das Gesamtbild ermittelt wird nach dem Ausführen der Objektkorrektur (OK), das abhängig von den jeweiligen Einzelbildern der erstseitigen Kamera (KAM_L), der Rückkamera (KAM_H) und der zweitseitigen Kamera (KAM_R) zusammengesetzt wird.

4. Verfahren nach Anspruch 1, bei dem das Fahrzeug (1)
- eine erstseitige Kamera (KAM_L) aufweist, die in einem Bereich einer ersten Fahrzeugseite angeordnet ist,
- eine zweitseitige Kamera (KAM_R) aufweist, die in einem Bereich einer zweiten Fahrzeugseite angeordnet ist,
- eine Rückkamera (KAM_H) aufweist, die in einem Heckbereich des Fahrzeugs (1) angeordnet ist und
- bei dem die Objektkorrektur (OK) bezüglich der erstseitigen Kamera (KAM_L) als erste Kamera und der Rückkamera (KAM_H) als zweite Kamera durchgeführt wird,
- bei dem die Objektkorrektur (OK) ferner bezüglich der zweitseitigen Kamera (KAM_R) als zweite Kamera und der Rückkamera (KAM_H) als erste Kamera durchgeführt wird und bei dem das Gesamtbild ermittelt wird nach dem Ausführen der Objektkorrektur (OK), das abhängig von den jeweiligen Einzelbildern der erstseitigen Kamera (KAM_L), der Rückkamera (KAM_H) und der zweitseitigen Kamera (KAM_R) zusammengesetzt wird.

5. Verfahren nach Anspruch 1, bei dem das Fahrzeug (1)
- eine erstseitige Kamera (KAM_L) aufweist, die in einem Bereich einer ersten Fahrzeugseite angeordnet ist,
- eine zweitseitige Kamera (KAM_R) aufweist, die in einem Bereich einer zweiten Fahrzeugseite angeordnet ist,
- eine Rückkamera (KAM_H) aufweist, die in einem Heckbereich des Fahrzeugs (1) angeordnet ist und
- bei dem die Objektkorrektur (OK) bezüglich der erstseitigen Kamera (KAM_L) als zweite Kamera und der Rückkamera (KAM_H) als erste Kamera durchgeführt wird,
- bei dem die Objektkorrektur (OK) ferner bezüglich der zweitseitigen Kamera (KAM_R) als erste Kamera und der Rückkamera (KAM_H) als zweite Kamera durchgeführt wird und bei dem das Gesamtbild ermittelt wird nach dem Ausführen der Objektkorrektur (OK), das abhängig von den jeweiligen Einzelbildern der erstseitigen Kamera (KAM_L), der Rückkamera (KAM_H) und der zweitseitigen Kamera (KAM_R) zusammengesetzt wird.

6. Verfahren nach einem der vorhergehenden Ansprüche, bei dem das Gesamtbild ein Sichtfeld von mindestens 180° abdeckt.

7. Verfahren nach einem der vorhergehenden Ansprüche, bei dem
- das Fahrzeug (1) Abstandssensoren aufweist, die dazu ausgebildet sind den Abstand des Fahrzeugs (1) zu Objektpunkten in der Umgebung des Fahrzeugs (1) zu erfassen,
- die Entfernung (DIST) des jeweiligen Objekts (OBJ) abhängig von Messwerten der Abstandssensoren ermittelt wird.

8. Verfahren nach einem der vorhergehenden Ansprüche, bei dem die Entfernung (DIST) des jeweiligen Objekts (OBJ) abhängig von den Bilddaten der ersten und/oder der zweiten Kamera mittels Triangulation ermittelt wird.

9. Verfahren nach einem der vorhergehenden Ansprüche, bei dem mindestens die erste und/oder die zweite Kamera als Stereokamera ausgebildet ist.

10. Verfahren nach einem der vorhergehenden Ansprüche, bei dem falls mindestens ein Objekt (OBJ) sowohl innerhalb des überlappenden Bereichs (ÜB) als auch außerhalb des überlappenden Bereichs (ÜB) liegt, ein Übergangsbereich des Gesamtbilds, der kennzeichnend ist für den Bereich des Gesamtbildes, in dem Bildinhalte des ersten Einzelbildes (PIC_1) an Bildinhalte des zweite Einzelbildes (PIC_2) angrenzen, mittels Bildtransformation angepasst wird, in einer solchen Weise, dass jeweilige einander entsprechende Kanten des Objekts (OBJ), das sowohl innerhalb des überlappenden Bereichs (ÜB) als auch außerhalb des überlappenden Bereichs (ÜB) liegt, im Übergangsbereich in einander übergehen.

11. Vorrichtung (SV) zum Betreiben eines Fahrzeugs (1), aufweisend:
- eine erste Kamera und eine zweite Kamera, die dazu ausgebildet sind einen Umgebungsbereich um das Fahrzeug (1) zu erfassen,
- wobei die erste Kamera
-- ein erstes Sichtfeld aufweist,
-- ein erstes Einzelbild (PIC_1) des ersten Sichtfeldes erfasst und erste Bilddaten des ersten Einzelbildes (PIC_1) bereitstellt,
- wobei die zweite Kamera,
-- ein zweites Sichtfeld aufweist,
-- ein zweites Einzelbild (PIC_2) des zweiten Sichtfeldes, das sich mit dem ersten Sichtfeld in einem überlappenden Bereich (ÜB) überlappt, erfasst und zweite Bilddaten des zweiten Einzelbildes (PIC_2) bereitstellt,
wobei die Vorrichtung (SV) dazu ausgebildet ist eine Objektkorrektur (OK) auszuführen abhängig von den ersten und den zweiten Bilddaten, aufweisend:
-- Ermitteln jeweils einer Entfernung (DIST) von in dem zweiten Einzelbild (PIC_2) abgebildeten Objekten (OBJ) zu einem vorgegebenen Bezugspunkt,
-- Ermitteln jeweils eines Winkels (ANG) des jeweiligen Objekts (OBJ) zu einer vorgegebenen Bezugsachse (KA),
-- abhängig von der ermittelten Entfernung (DIST) und des ermittelten Winkels (ANG) des jeweiligen Objekts (OBJ) Ermitteln ob das jeweilige Objekt (OBJ) sich in dem überlappenden Bereich (ÜB) befindet und falls ermittelt wurde, dass das jeweilige Objekt (OBJ) in dem überlappenden Bereich (ÜB) ist, Entfernen des jeweiligen Objekts (OBJ) aus dem zweiten Einzelbild (PIC_2),
und ein Gesamtbild zu ermitteln nach dem Ausführen der Objektkorrektur (OK), das abhängig von dem ersten Einzelbild (PIC_1) und dem zweiten Einzelbild (PIC_2) zusammengesetzt wird.

## Claims

1. A method for operating a vehicle (1) which comprises a first and a second camera configured to capture an area surrounding the vehicle (1),
- in which the first camera
-- has a first field of view,
-- captures a first individual image (PIC_1) of the first field of view, and
-- provides first image data of the first individual image (PIC_1),
- in which the second camera
-- has a second field of view, which overlaps the first field of view in an overlap region (- B),
-- captures a second individual image (PIC_2) of the second field of view, and
-- provides second image data of the second individual image (PIC_2),
- in which an object correction (OK) is performed depending on the first and second image data and comprises the following steps:
-- determining a distance (DIST) of any objects (OBJ) imaged in the second individual image (PIC_2) from a predetermined reference point;
-- determining an angle (ANG) of each object(OBJ) in relation to a predetermined reference axis (KA);
-- in each case depending on the determined distance (DIST) and the determined angle (ANG) of a particular object (OBJ), determining whether said object (OBJ) is located in the overlap region (- B), and, if it is determined that said object (OBJ) is located in the overlap region (- B), removing said object (OBJ) from the second individual image (PIC_2); and
- in which an overall image is determined once the object correction (OK) has been performed, wherein the overall image is composed depending on the first individual image (PIC_1) and the second individual image (PIC_2).

2. A method according to claim 1, in which the vehicle (1) comprises:
- a first-side camera (KAM_L), which is arranged in a region of a first vehicle side;
- a second-side camera (KAM_R), which is arranged in a region of a second vehicle side; and
- a rear camera (KAM_H), which is arranged in a tail-end region of the vehicle (1); and
- in which the object correction (OK) is performed in terms of the first-side camera (KAM_L) as the second camera and the rear camera (KAM_H) as first camera;
- in which the object correction (OK) is also performed in terms of the second-side camera (KAM_R) as second camera and the rear camera (KAM_H) as first camera; and
in which the overall image is determined once the object correction (OK) has been performed, which overall image is composed depending on the respective individual images of the first-side camera (KAM_L), the rear camera (KAM_H) and the second-side camera (KAM_R).

3. A method according to claim 1, in which the vehicle (1) comprises:
- a first-side camera (KAM_L), which is arranged in a region of a first vehicle side;
- a second-side camera (KAM_R), which is arranged in a region of a second vehicle side; and
- a rear camera (KAM_H), which is arranged in a tail-end region of the vehicle (1), and
- in which the object correction (OK) is performed in terms of the first-side camera (KAM_L) as first camera and the rear camera (KAM_H) as second camera;
- in which the object correction (OK) is also performed in terms of the second-side camera (KAM_R) as first camera and the rear camera (KAM_H) as second camera; and
in which the overall image is determined once the object correction (OK) has been performed, which overall image is composed depending on the respective individual images of the first-side camera (KAM_L), the rear camera (KAM_H) and the second-side camera (KAM_R).

4. A method according to claim 1, in which the vehicle (1) comprises:
- a first-side camera (KAM_L), which is arranged in a region of a first vehicle side;
- a second-side camera (KAM_R), which is arranged in a region of a second vehicle side; and
- a rear camera (KAM_H), which is arranged in a tail-end region of the vehicle (1), and
- in which the object correction (OK) is performed in terms of the first-side camera (KAM_L) as first camera and the rear camera (KAM_H) as second camera;
- in which the object correction (OK) is also performed in terms of the second-side camera (KAM_R) as second camera and the rear camera (KAM_H) as first camera, and
in which the overall image is determined once the object correction (OK) has been performed, which overall image is composed depending on the respective individual images of the first-side camera (KAM_L), the rear camera (KAM_H) and the second-side camera (KAM_R).

5. A method according to claim 1, in which the vehicle (1) comprises:
- a first-side camera (KAM_L), which is arranged in a region of a first vehicle side;
- a second-side camera (KAM_R), which is arranged in a region of a second vehicle side; and
- a rear camera (KAM_H), which is arranged in a tail-end region of the vehicle (1), and
- in which the object correction (OK) is performed in terms of the first-side camera (KAM_L) as second camera and the rear camera (KAM_H) as first camera;
- in which the object correction (OK) is also performed in terms of the second-side camera (KAM_R) as first camera and the rear camera (KAM_H) as second camera, and
in which the overall image is determined once the object correction (OK) has been performed, which overall image is composed depending on the respective individual images of the first-side camera (KAM_L), the rear camera (KAM_H) and the second-side camera (KAM_R).

6. A method according to any one of the preceding claims, in which the overall image covers a field of view of at least approximately 180é

7. A method according to any one of the preceding claims, in which:
- the vehicle (1) comprises distance sensors, which are configured to detect the distance of the vehicle (1) from object points in the surroundings of the vehicle (1), and
- the distance (DIST) of a particular object (OBJ) is established depending on measurement values of the distance sensors.

8. A method according to any one of the preceding claims, in which the distance (DIST) of a particular object (OBJ) is determined depending on the image data of the first and/or the second camera by means of triangulation.

9. A method according to any one of the preceding claims, in which at least the first and/or the second camera are/is formed as a stereo camera.

10. A method according to any one of the preceding claims, in which, if at least one object (OBJ) lies both within the overlap region (- B) and outside the overlap region (- B), a transition region of the overall image, which transition region is characteristic for the region of the overall image in which image contents of the first individual image (PIC_1) are adjacent to image contents of the second individual image (PIC_2), is adapted by means of an image transformation, in such a way that respective edges, which correspond to one another, of the object (OBJ) lying both within the overlap region (- B) and outside the overlap region (- B), merge into one another in the transition region.

11. A device (SV) for operating a vehicle (1), comprising:
- a first camera and a second camera, which are configured to capture images of an area surrounding the vehicle (1),
- wherein the first camera
-- has a first field of view,
-- captures a first individual image (PIC_1) of the first field of view, and
-- provides first image data of the first individual image (PIC_1),
- wherein the second camera
-- has a second field of view,
-- captures a second individual image (PIC_2) of the second field of view, which overlaps the first field of view in an overlap region (- B), and provides second image data of the second individual image (PIC_2),
wherein the device (SV) is designed to perform an object correction (OK) depending on the first and second image data, said object correction comprising the following steps:
-- determining a distance (DIST) of any objects (OBJ) imaged in the second individual image (PIC_2) from a predetermined reference point;
-- determining an angle (ANG) of each object (OBJ) in relation to a predetermined reference axis (KA),
-- in each case depending on the determined distance (DIST) and the determined angle (ANG) of a particular object (OBJ), determining whether said object (OBJ) is located in the overlap region (- B), and, if it is determined that said object (OBJ) is located in the overlap region (- B), removing said object (OBJ) from the second individual image (PIC_2); and
to determine an overall image once the object correction (OK) has been performed, the overall image being composed depending on the first individual image (PIC_1) and the second individual image (PIC_2).

## Revendications

1. Procédé de gestion d'un véhicule (1) qui comporte une première caméra et une seconde caméra qui sont réalisées pour pouvoir détecter une zone d'environnement autour du véhicule (1), selon lequel :
- la première caméra :
• à un premier champ de vision,
• détecte une première image individuelle (PIC_1) du premier champ de vision, et
• fournit des premières données d'image du premier champ de vision (PIC_1),
- la seconde caméra :
• a un second champ de vision qui se chevauche avec le premier champ de vision dans une zone de chevauchement (ÜB),
• détecte une seconde image individuelle (PIC_2) du second champ de vision, et
• fournit des secondes données d'image de la seconde image individuelle (PIC_2), et
- on effectue en fonction des premières données d'image et des secondes données d'image, une correction d'objets (OK) comprenant des étapes consistant à :
• déterminer respectivement la distance (DIST) d'objets (OBJ) représentés dans la seconde image individuelle (PIC_2) par rapport à un point de référence prédéfini,
• déterminer respectivement l'angle (ANG) de l'objet (OBJ) respectif par rapport à un axe de référence (KA) prédéfini,
• en fonction de la distance (DIST) déterminée et de l'angle (ANG) déterminé de l'objet respectif (OBJ) déterminer si l'objet respectif (OBJ) est situé dans la zone de chevauchement (ÜB), et il a été déterminé que l'objet respectif (OBJ) est situé dans la zone de chevauchement (ÜB) supprimer cet objet (OBJ) de la seconde image individuelle (PIC_2),
- une image globale étant déterminée après la mise en oeuvre de la correction d'objet (OK) cette image étant composée en fonction de la première image individuelle (PIC_1) et de la seconde image individuelle (PIC_2).

2. Procédé conforme à la revendication 1, selon lequel le véhicule (1) :
- comporte une caméra de premier côté (KAM_L) qui est montée dans la zone d'un premier côté du véhicule,
- comporte une caméra de second côté (KAM_R) qui est montée dans la zone du second côté du véhicule,
- comporte une caméra arrière (KAM_H) qui est montée dans la zone arrière du véhicule (1) et selon lequel,
- la correction d'objet (OK) est effectuée en se fondant sur la caméra de premier côté (KAM_L) constituant une seconde caméra et de la caméra arrière (KAM_H) constituant une première caméra,
- la correction d'objet (OK) est en outre effectuée en se fondant sur la caméra de second côté (KAM_R) constituant une seconde caméra et de la caméra arrière (KAM_H) constituant une première caméra, et l'image globale est déterminée après la mise en oeuvre de la correction d'objet (OK) et est composée en fonction des images individuelles respectives de la caméra de premier côté (KAM_L), de la caméra arrière (KAM_H) et de la caméra de second côté (KAM_R).

3. Procédé conforme à la revendication 1, selon lequel le véhicule (1) :
- comporte une caméra de premier côté (KAM_L) qui est montée dans la zone d'un premier côté du véhicule,
- comporte une caméra de second côté (KAM_R) qui est montée dans la zone du second côté du véhicule,
- comporte une caméra arrière (KAM_H) qui est montée dans la zone arrière du véhicule (1) selon lequel,
- la correction d'objet (OK) est effectuée en se fondant sur la caméra de premier côté (KAM_L) constituant une première caméra et de la caméra arrière (KAM_H) constituant une seconde caméra,
- la correction d'objet (OK) et en outre effectuée en se fondant sur la caméra de second côté (KAM_R) constituant une première caméra et de la caméra arrière (KAM_H) constituant une seconde caméra, et l'image globale est déterminée après la mise en oeuvre de la correction d'objet (OK) et est composée en fonction des images individuelles respectives de la caméra de premier côté (KAM_L), de la caméra arrière (KAM_H) et de la caméra de second côté (KAM_R).

4. Procédé conforme à la revendication 1, selon lequel le véhicule (1) :
- comporte une caméra de premier côté (KAM_L) qui est montée dans la zone d'un premier côté du véhicule,
- comporte une caméra de second côté (KAM_R) qui est montée dans la zone du second côté du véhicule,
- comporte une caméra arrière (KAM_H) qui est montée dans la zone arrière du véhicule (1) et selon lequel,
- la correction d'objet (OK) est effectuée en se fondant sur la caméra de premier côté (KAM_L) constituant une première caméra et de la caméra arrière (KAM_H) constituant une seconde caméra,
- la correction d'objet (OK) est en outre effectuée en se fondant sur la caméra de second côté (KAM_R) constituant une seconde caméra et la caméra arrière (KAM_H) constituant une première caméra, et l'image globale est déterminée après la mise en oeuvre de la correction d'objet (OK) et est composée en fonction des images individuelles respectives de la caméra de premier côté (KAM_L), de la caméra arrière (KAM_H) et de la caméra de second côté (KAM_R).

5. Procédé conforme à la revendication 1, selon lequel le véhicule (1) :
- comporte une caméra de premier côté (KAM_L) qui est montée dans la zone d'un premier côté du véhicule,
- comporte une caméra de second côté (KAM_R) qui est montée dans la zone du second côté du véhicule,
- comporte une caméra arrière (KAM_H) qui est montée dans la zone arrière du véhicule (1) et selon lequel,
- la correction d'objet (OK) est effectuée en se fondant sur la caméra de premier côté (KAM_L) constituant une seconde caméra et de la caméra arrière (KAM_H) constituant une première caméra,
- la correction d'objet (OK) est en outre effectuée en se fondant sur la caméra de second côté (KAM_R) constituant une première caméra et de la caméra arrière (KAM_H) constituant une seconde caméra, et l'image globale est déterminée après la mise en oeuvre de la correction d'objet (OK) et est composée en fonction des images individuelles respectives de la caméra de premier côté (KAM_L) de la caméra arrière (KAM_H) et de la caméra de second côté (KAM_R).

6. Procédé conforme à l'une des revendications précédentes, selon lequel :
l'image globale couvre un champ de vision d'au moins 180°.

7. Procédé conforme à l'une des revendications précédentes, selon lequel :
- le véhicule (1) comporte des capteurs de distance qui sont réalisés pour permettre de détecter la distance du véhicule (1) à des points objets dans l'environnement du véhicule (1),
- la distance (DIST) de l'objet respectif (OBJ) est déterminée en fonction des valeurs de mesure des capteurs de distance.

8. Procédé conforme à l'une des revendications précédentes, selon lequel :
la distance (DIST) de l'objet respectif (OBJ) est déterminée en fonction des données d'images de la première caméra et/ou de la seconde caméra par triangulation.

9. Procédé conforme à l'une des revendications précédentes, selon lequel :
la première caméra et/ou la seconde caméra est(sont) réalisée(s) sous la forme de stéréo caméra.

10. Procédé conforme à l'une des revendications précédentes, selon lequel :
dans le cas où au moins un objet (OBJ) est situé dans la zone de chevauchement (ÜB) et également à l'extérieur de cette zone de chevauchement (ÜB) la zone de transition de l'image globale, qui est caractéristique pour la zone de l'image globale dans laquelle des contenus d'image de la première image individuelle (PIC_1) sont adjacents à des contenus d'image de la seconde image individuelle (PIC_2), sont adaptés par transformation d'image d'une manière telle que des bords respectivement correspondants de l'objet (OBJ) qui est situé dans la zone de chevauchement (ÜB) et également à l'extérieur de cette zone de chevauchement (ÜB) se raccordent dans la zone de transition.

11. Dispositif (SV) de gestion d'un véhicule (1), comprenant :
- une première caméra et une seconde caméra qui sont réalisées pour permettre de détecter une zone environnement autour du véhicule (1),
- la première caméra :
• ayant un premier champ de vision,
• détectant une première image individuelle (PIC_1) du premier champ de vision et fournissant des premières données d'images de la première image individuelle (PIC_1),
- la seconde caméra :
• ayant un second champ de vision,
• détectant une seconde image individuelle (PIC_2) du second champ de vision qui se chevauche avec le premier champ de vision dans une zone de chevauchement (ÜB) et fournit des secondes données d'image de la seconde image individuelle (PIC_2), le dispositif (SV) étant réalisé pour effectuer en fonction des premières données d'image et des secondes données d'image, une correction d'objet (OK) comprenant des étapes consistant à :
• déterminer respectivement la distance (DIST) d'objets (OBJ) représentés dans la seconde image individuelle (PIC_2) par rapport à un point de référence prédéfini,
• déterminer respectivement l'angle (ANG) de l'objet (OBJ) respectif par rapport à un axe de référence (KA) prédéfini,
• en fonction de la distance (DIST) déterminée et de l'angle (ANG) déterminé de l'objet (OBJ) respectif, déterminer si cet objet respectif (OBJ) est situé dans la zone de chevauchement (ÜB), et s'il a été déterminé que l'objet respectif (OBJ) est situé dans la zone de chevauchement (ÜB) supprimer cet objet (OBJ) de la seconde image individuelle (PIC_2),
déterminer une image globale après la mise en oeuvre de la correction d'objet (OK) cette image globale étant composée en fonction de la première image individuelle (PIC_1) et de la seconde image individuelle (PIC_2).
